# EUROPÄISCHE PATENTSCHRIFT

(11) **EP 3 761 202 B1**
(45) Veröffentlichungstag und Bekanntmachung des Hinweises auf die Patenterteilung: **28.09.2022**
(21) Anmeldenummer: 20179994.7
(22) Anmeldetag: 15.06.2020
(51) Int. Cl.: G06F 21/57, G06F 21/60

(54) **SYSTEM UND VERFAHREN ZUR SPEICHERUNG EINES ZU SCHÜTZENDEN DATENSATZES**
SYSTEM AND METHOD FOR STORING A DATA SET TO BE PROTECTED
SYSTÈME ET PROCÉDÉ DE MÉMORISATION D'UN ENSEMBLE DE DONNÉES À PROTÉGER

(30) Priorität: 04.07.2019 DE 102019209887
(43) Veröffentlichungstag der Anmeldung: 06.01.2021
(73) Patentinhaber: BSH Hausgeräte GmbH, 81739 München (DE)
(72) Erfinder: Gottschalk, Richard, 93053 Regensburg (DE)

(56) Entgegenhaltungen:
- US-A1- 2006 174 109
- US-A1- 2015 294 122

## Beschreibung

Die Erfindung betrifft ein System und ein entsprechendes Verfahren zur Speicherung und zur Bereitstellung einer sicheren Zugriffsmöglichkeit auf einen zu schützenden Datensatz, insbesondere auf einen Schlüssel zur Verschlüsselung von Daten.

Auf einem vernetzten Gerät, insbesondere auf einem Hausgerät, können ein oder mehrere zu schützende Datensätze gespeichert werden, die vor einem unzulässigen Zugriff zu schützen sind. Beispiele für einen zu schützenden Datensatz sind ein WIFI Passwort, mit dem das Gerät eine WLAN Verbindung zu einem WLAN Access Point aufbauen kann, und/oder ein privater TLS (Transport Layer Security) Schlüssel, der zur Authentifizierung des Geräts an einem Backend-Server und/oder zur Verschlüsselung von Daten bei einer Kommunikation mit einem Backend-Server verwendet werden kann.

Weitere Vorrichtungen und Systeme zur Datenverschlüsselung sind beispielsweise in der US 2015/294122 A1 oder der US 2006/174109 A1 offenbart.

Das vorliegende Dokument befasst sich mit der technischen Aufgabe, ein System und ein entsprechendes Verfahren bereitzustellen, mit denen ein zu schützender Datensatz in effizienter Weise sicher vor unbefugten Zugriffen geschützt werden kann.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein System zur Steuerung des Zugriffs auf (zumindest) einen zu schützenden Datensatz. Dabei kann der zu schützende Datensatz z.B. einen Verschlüsselungsschlüssel und/oder einen Authentisierungsschlüssel (z.B. einen TLS Schlüssel) und/oder ein Passwort (z.B. ein WLAN Passwort) umfassen. Der zu schützende Datensatz kann ausgebildet sein, eine sichere Kommunikation eines Geräts (das das System umfasst) mit einer anderen Einheit (z.B. mit einem Server) zu ermöglichen. Das System kann auf ein oder mehreren Mikroprozessoren implementiert sein.

Das System umfasst eine sichere Laufzeitumgebung, die eingerichtet ist, eine Entschlüsselungs-Software auszuführen. Die sichere Laufzeitumgebung kann insbesondere ein sogenanntes Trusted Execution Environment (TEE) sein. Beispielhafte sichere Laufzeitumgebungen sind: eine TrustZone der Firma ARM; ein Platform Security Processor der Firma AMD; ein Secure Extension Mode der Firma AMD; und/oder eine Trusted Execution Technology und/oder eine Software Guard Extension der Firma Intel.

Die Entschlüsselungs-Software ist ausgebildet, einen verschlüsselten, zu schützenden Datensatz zu entschlüsseln, und entschlüsselt auf einer sicheren Speichereinheit zu speichern. Insbesondere kann die Entschlüsselungs-Software ausgebildet sein, den verschlüsselten, zu schützenden Datensatz aus einer weiteren (ersten) Speichereinheit auszulesen, den zu schützenden Datensatz zu entschlüsseln und den entschlüsselten, zu schützenden Datensatz auf einer sicheren (zweiten) Speichereinheit zu speichern. Dabei kann es sich bei der weiteren (ersten) Speichereinheit um einen nicht-flüchtigen Speicher handeln (so dass der verschlüsselte, zu schützenden Datensatz auch vor Inbetriebnahme und/oder nach Beendigung des Betriebs des Systems in der weiteren (ersten) Speichereinheit gespeichert ist). Die Entschlüsselung des verschlüsselten, zu schützenden Datensatzes erfolgt bevorzugt erst bei Inbetriebnahme des Systems, insbesondere so dass der zu schützende Datensatz vor Inbetriebnahme und/oder nach Beendigung des Betriebs des Systems nicht in unverschlüsselter Form vorliegt).

Die sichere Speichereinheit ist Teil des Systems. Bevorzugt ist die sichere Speichereinheit Teil der sicheren Laufzeitumgebung. Die sichere Speichereinheit ist bevorzugt ein RAM (Random Access Memory), der grundsätzlich und/oder fest (insbesondere nicht zerstörungsfrei entnehmbar) in dem System bzw. in der sicheren Laufzeitumgebung verbaut ist. Die sichere Speichereinheit ist derart ausgebildet, dass ein Zugriff auf die sichere Speichereinheit ausschließlich und/oder allein über die sichere Laufzeitumgebung möglich ist. Die sichere Speichereinheit umfasst bevorzugt einen RAM Speicher. Alternativ oder ergänzend kann die sichere Speichereinheit einen flüchtigen Speicher umfassen.

Ferner ist die sichere Laufzeitumgebung ausgebildet, ein nochmaliges Ausführen der Entschlüsselungs-Software (während des Betriebs des Systems) zu unterbinden. Insbesondere kann die sichere Laufzeitumgebung derart ausgebildet sein, dass während eines ununterbrochenen Betriebs des Systems die Entschlüsselungs-Software nur genau einmal (insbesondere bei der Inbetriebnahme des Systems) ausgeführt werden kann, und daraufhin (für den verbleibenden, ununterbrochenen, Betrieb des Systems) gesperrt ist.

Das System ermöglicht in effizienter Weise einen kontrollierten Zugriff auf den zu schützenden Datensatz. Insbesondere kann zuverlässig vermieden werden, dass ein Angreifer auf den entschlüsselten, zu schützenden Datensatz zugreift, und dass ein Angreifer den verschlüsselten, zu schützenden Datensatz entschlüsseln kann (da dem Angreifer die technische Verfügbarkeit des Entschlüsselungsschlüssels nicht möglich ist).

Die Entschlüsselungs-Software kann ausgebildet sein, zum Entschlüsseln des verschlüsselten, zu schützenden Datensatzes einen Datensatz-Schlüssel zu verwenden. Dabei kann der Datensatz-Schlüssel als Hardware Schlüssel (z.B. als Dongel) ausgebildet sein. Beispielsweise kann der Hardware-Schlüssel in einem Cryptobeschleuniger integriert sein. Alternativ oder ergänzend kann der Hardware Schlüssel in einer Komponente extrahiert werden, die durch die sichere Laufzeitumgebung separiert werden kann, insbesondere in Hardware (HW), die nur der sicheren Laufzeitumgebung bekannt ist (da die sichere Laufzeitumgebung so konfiguriert wurde). Dies kann ggf. durch einen USB Controller ermöglicht werden.

Alternativ oder ergänzend kann das System derart ausgebildet sein, dass ein Zugriff auf den Datensatz-Schlüssel ausschließlich über die Entschlüsselungs-Software möglich ist. So kann in zuverlässiger Weise gewährleistet werden, dass ein Angreifer keinen Zugriff auf den Datensatz-Schlüssel zum Entschlüsseln des verschlüsselten, zu schützenden Datensatzes erhält.

Die sichere Laufzeitumgebung kann ausgebildet sein, ein Flag für die Ausführbarkeit der Entschlüsselungs-Software zu speichern. Das Flag kann dabei in zuverlässiger Weise in der sicheren Speichereinheit gespeichert sein.

Die sichere Laufzeitumgebung kann eingerichtet sein, den Zustand des Flags zu verändern, um ein nochmaliges Ausführen der Entschlüsselungs-Software zu unterbinden, und/oder um die Entschlüsselungs-Software zu sperren. Beispielsweise kann das Flag beim (z.B. vor oder nach dem) erstmaligen Aufruf der Entschlüsselungs-Software (bei Inbetriebnahme des Systems) zu setzen (oder zurückzusetzen), um die Entschlüsselungs-Software zu sperren.

Die sichere Laufzeitumgebung kann eingerichtet sein, vor Ausführen der Entschlüsselungs-Software (immer zunächst) den Zustand des Flags zu überprüfen, und in Abhängigkeit von dem Zustand des Flags das Ausführen der Entschlüsselungs-Software zu ermöglichen oder zu unterbinden. So kann in effizienter und zuverlässiger Weise bewirkt werden, dass die Entschlüsselungs-Software (während des Betriebs des Systems) nur genau einmal ausgeführt wird.

Das System kann einen Bootloader umfassen, der eingerichtet ist, bei Inbetriebnahme des Systems zunächst die sichere Laufzeitumgebung zu starten, um mittels der Entschlüsselungs-Software den verschlüsselten, zu schützenden Datensatz zu entschlüsseln, und den entschlüsselten, zu schützenden Datensatz in der sicheren Speichereinheit zu speichern. Des Weiteren kann der Bootloader eingerichtet sein, erst danach (d.h. erst nach dem einmaligen Entschlüsseln des zu schützenden Datensatzes), ein Betriebssystem (z.B. Linux) zur Ausführung einer Software-Anwendung, die den zu schützenden Datensatz verwendet, zu starten. So kann zuverlässig vermieden werden, dass ein Angreifer im Rahmen der Inbetriebnahme des Systems auf den zu schützenden Datensatz zugreift. Insbesondere kann so zuverlässig vermieden werden, dass das einmalige Ausführen der Entschlüsselungs-Software durch einen Angreifer bewirkt wird.

Das Betriebssystem des Systems kann ausgebildet sein, während des Betriebs des Systems ein oder mehrere Software-Applikationen auszuführen. Die sichere Laufzeitumgebung kann ausgebildet sein, eine Anfrage der Software-Applikation für den zu schützenden Datensatz zu überprüfen, und (ggf. ausschließlich) in Reaktion auf ein positives Prüfergebnis den entschlüsselten, zu schützenden Datensatz aus der sicheren Speichereinheit auszulesen und ggf. an die Software-Applikation zu übergeben und/oder in Zusammenhang mit der Software-Applikation zu verwenden (insbesondere im Falle eines Passwortes). Alternativ oder ergänzend kann der entschlüsselte, zu schützende Datensatz (insbesondere im Falle eines Schlüssels) innerhalb der sicheren Laufzeitumgebung dazu genutzt werden, eine Berechnung im Rahmen eines Challenge-Response-Verfahrens durchzuführen. Der entschlüsselte, zu schützende Datensatz kann dann innerhalb der sicheren Laufzeitumgebung verbleiben, und die Software-Applikation würde nur die in der sicheren Laufzeitumgebung ermittelte Response erhalten. So kann ein zuverlässiger Zugriff auf den zu schützenden Datensatz gewährleistet werden.

Das System kann derart ausgebildet sein, dass der in der sicheren Speichereinheit gespeicherte, entschlüsselte, zu schützende Datensatz bei Beendigung des Betriebs des Systems gelöscht wird, insbesondere derart, dass nach Beendigung des Betriebs des Systems der zu schützende Datensatz nur noch verschlüsselt vorliegt. Beispielsweise kann das System Teil eines Geräts sein, das wiederholt eingeschaltet und ausgeschaltet wird. Das Einschalten des Geräts kann (ggf. automatisch) zu einer Inbetriebnahme des Systems führen, während das Ausschalten des Geräts (ggf. automatisch) zu einer Beendigung des Betriebs des Systems führen kann. Bei jeder Inbetriebnahme des Systems wird erfindungsgemäß der zu schützende Datensatz durch einmaliges Ausführen der Entschlüsselungs-Software einmalig entschlüsselt und in der sicheren Speichereinheit gespeichert werden. Bei Beendigung des Betriebs des Systems kann dann der entschlüsselte, zu schützende Datensatz wieder gelöscht werden. So kann zuverlässig ein unbefugter Zugriff auf den zu schützenden Datensatz vermieden werden.

Das System kann derart ausgebildet sein, dass bei Inbetriebnahme des Systems die Authentizität von Komponenten des Systems, insbesondere des Bootloaders und/oder der Entschlüsselungs-Software, überprüft und/oder gewährleistet werden kann. Mit anderen Worten, es kann bei Inbetriebnahme des Systems eine Garantie für die Echtheit der Firmware der sicheren Laufzeitumgebung ermittelt werden. Mit noch anderen Worten, es kann ein Secure Boot Mechanismus bereitgestellt werden. So kann z.B. gewährleistet werden, dass die Überprüfung des Flags für die Ausführbarkeit der Entschlüsselungs-Software durchgeführt wird.

Gemäß einem weiteren Aspekt der Erfindung wird ein Gerät, insbesondere ein Hausgerät oder ein Haushaltsgerät, beschrieben. Das Gerät umfasst eine Kommunikationseinheit, die eingerichtet ist, über eine Kommunikationsverbindung (z.B. WLAN) mit einer externen Einheit (z.B. mit einem Backend-Server) Daten zu kommunizieren. Des Weiteren umfasst das Gerät das in diesem Dokument beschriebene System, das eingerichtet ist, den Zugriff auf einen zu schützenden Datensatz zu steuern. Die Kommunikationseinheit des Geräts kann eingerichtet sein, den zu schützenden Datensatz von dem System zu beziehen und unter Verwendung des zu schützenden Datensatzes Daten mit der externen Einheit zu kommunizieren. So kann eine sichere Einbindung eines Geräts in ein Netzwerk von Geräten ermöglicht werden.

Gemäß einem weiteren Aspekt der Erfindung wird ein Verfahren zur Steuerung des Zugriffs auf einen zu schützenden Datensatz beschrieben. Das Verfahren umfasst das Entschlüsseln eines verschlüsselten, zu schützenden Datensatzes mittels einer Entschlüsselungs-Software innerhalb einer sicheren Laufzeitumgebung. Des Weiteren umfasst das Verfahren das Speichern des entschlüsselten, zu schützenden Datensatzes auf einer sicheren Speichereinheit, wobei die sichere Speichereinheit derart ausgebildet ist, dass ein Zugriff auf die sichere Speichereinheit ausschließlich über die sichere Laufzeitumgebung möglich ist. Ferner umfasst das Verfahren das Sperren einer weiteren Ausführung der Entschlüsselungs-Software (während einer (durchgängigen) Betriebsphase).

Es ist zu beachten, dass jegliche Aspekte des in diesem Dokument beschriebenen Systems und des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1: ein Blockdiagramm eines Systems zur Speicherung und zur Verwaltung des Zugriffs auf einen zu schützenden Datensatz;
- Figur 2: ein Blockdiagramm eines beispielhaften Hausgeräts; und
- Figur 3: ein Ablaufdiagramm eines beispielhaften Verfahrens zur Speicherung und zur Verwaltung des Zugriffs auf einen zu schützenden Datensatz.

Wie eingangs dargelegt, befasst sich das vorliegende Dokument damit, einen zu schützenden Datensatz in (kosten-) effizienter und sicherer Weise vor unbefugten Zugriffen zu schützen. Wie im in diesem Dokument beschrieben, kann die Kosteneffizienz insbesondere dadurch erreicht werden, dass neben Code Memory (RAM) und Data Memory (Flash) kein weiteres Speichermedium benötigt wird.

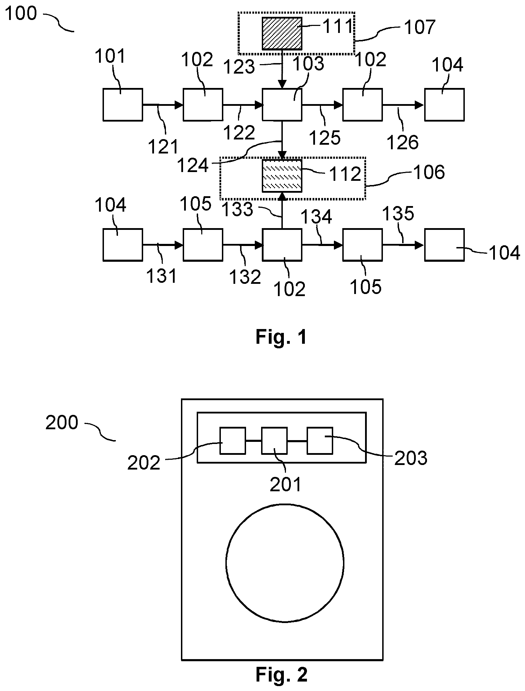

Fig. 1 zeigt ein beispielhaftes System 100, das eine erste (z.B. nicht-flüchtige) Speichereinheit 107 umfasst, auf der der zu schützende Datensatz 111 in verschlüsselter Form gespeichert ist. Aufgrund der Verschlüsselung des zu schützenden Datensatzes 111 ist der zu schützenden Datensatzes 111 vor einem unbefugten Zugriff geschützt. Es wäre jedoch denkbar, dass ein Unbefugter Kenntnis von dem Datensatz-Schlüssel erhält, der zur Verschlüsselung des zu schützenden Datensatzes 111 verwendet wurde, und so indirekt Zugriff auf den zu schützenden Datensatz 111 erlangen könnte.

Das System 100 umfasst eine zweite (sichere) Speichereinheit 106, auf der der zu schützende Datensatz 112 in nicht-verschlüsselter Form gespeichert wird. Die zweite Speichereinheit 106 ist derart ausgebildet, dass auf die zweite Speichereinheit 106 nur über ein TEE 102 (d.h. über ein Trusted Execution Environment) zugegriffen werden kann, so dass der Zugriff auf den zu schützenden Datensatz 112 in nicht-verschlüsselter Form zuverlässig kontrolliert werden kann.

Die Speicherung des zu schützenden Datensatzes 112 in nicht-verschlüsselter Form ermöglicht es einer Software-Anwendung 105, auch ohne Kenntnis des Datensatz-Schlüssels zur Entschlüsselung des (verschlüsselten zu schützenden Datensatzes auf den zu schützenden Datensatz 112 zuzugreifen. So kann eine unkontrollierte Verteilung des Datensatz-Schlüssels zur Entschlüsselung des zu schützenden Datensatzes 111 in verschlüsselter Form vermieden werden.

Die Entschlüsselung des zu schützenden Datensatzes 111 in verschlüsselter Form und die Speicherung des zu schützenden Datensatz 112 in nicht-verschlüsselter Form kann einmalig bei Inbetriebnahme des Systems 100 durch das TEE 102 erfolgen. Eine wiederholte Ausführung der Entschlüsselungs-Software 103 kann dabei nach der einmaligen Ausführung unterbunden werden (z.B. durch Setzen eines Flags). So kann zuverlässig ein unberechtigter Zugriff auf den zu schützenden Datensatzes 111 in verschlüsselter Form vermieden werden.

Fig. 1 veranschaulicht beispielhafte Aktions-Schritte des Systems 100 bei Inbetriebnahme des Systems 100 (Schritte 121 bis 126) und bei Betrieb des Systems 100 (Schritte 131 bis 135). Bei Inbetriebnahme des Systems 100 wird mittels eines Bootloader 101 das TEE 102 gestartet (Schritt 121). Des Weiteren wird durch das TEE 102 und/oder innerhalb des TEEs 102 die Entschlüsselungs-Software 103 gestartet (Schritt 122). Die Entschlüsselungs-Software 103 führt einmalig die Entschlüsselung des zu schützenden Datensatzes 111 in verschlüsselter Form durch (Schritt 123) und speichert den zu schützenden Datensatz 112 in nicht-verschlüsselter Form in der sicheren zweiten Speichereinheit 106 (Schritt 124).

Nach der einmaligen Ausführung der Entschlüsselungs-Software 103 wird die Entschlüsselungs-Software 103 von dem TEE 102 gesperrt (Schritt 125), und das TEE 102 führt den weiteren Bootprozess des Betriebssystems 104 des Geräts aus (Schritt 126), in dem das System 100 betrieben wird.

Während des Betriebs des Systems 100 kann durch das Betriebssystem 104 (z.B. LINUX) eine Software-Anwendung 105 ausgeführt werden (Schritt 131), wobei die Software-Anwendung 105 ggf. den Zugriff auf den zu schützenden Datensatz 111, 112 erfordert. Beispielsweise kann der zu schützende Datensatz 111, 112 ein WIFI Passwort umfassen, mit dem eine WLAN Verbindung zu einem WLAN Access Point aufgebaut werden kann. Die Software-Anwendung 105 kann z.B. darauf ausgelegt sein, eine Kommunikation mit dem WLAN Access Point zu ermöglichen.

Wenn die Software-Anwendung 105 einen Zugriff auf den zu schützenden Datensatz 111, 112 erfordert, kann die Software-Anwendung 105 das TEE 102 auffordern, den zu schützenden Datensatz 111, 112 bereitzustellen (jedoch dabei nicht auszuhändigen) (Schritt 132). Das TEE 102 kann dabei überprüfen, ob die Software-Anwendung 105 für den Erhalt des zu schützenden Datensatzes 111, 112 autorisiert ist. Das TEE 102 kann daraufhin auf die zweite Speichereinheit 106 zugreifen (Schritt 133), und den zu schützenden Datensatz 112 in nicht-verschlüsselter Form an die Software-Anwendung 105 übergeben und/oder den zu schützenden Datensatz 112 in nicht-verschlüsselter Form zu verwenden (z.B. zur Erstellung einer Response in einem Challenge-Response-Verfahren), ohne dabei den zu schützenden Datensatz 112 in nicht-verschlüsselter Form an eine externe Software-Anwendung zu übergeben (Schritt 134). Des Weiteren kann die Software-Anwendung 105 (z.B. nach Aufbau einer WLAN-Verbindung) beendet werden (Schritt 135). Ggf. kann auch das Betriebssystem 104 eingerichtet sein, auf die zweite Speichereinheit 106 zuzugreifen. Dabei kann jedoch ein Zugriff auf die Adresse, an der der zu schützenden Datensatz 112 gespeichert ist, für Zugriffe des Betriebssystems 104 gesperrt sein (insbesondere kann der Zugriff durch das TEE 102 hardwareseitig unterbunden werden).

Das System 100 kann Teil eines Geräts 200, insbesondere eines Hausgeräts, etwa einer Waschmaschine, einer Spülmaschine, eines Ofens, eines Herdes, eines Kühlschranks, eines Trockners, einer Küchenmaschine, etc., sein. Das Gerät 200 kann eine Steuereinheit 201 (z.B. mit ein oder mehreren Mikroprozessoren) aufweisen, auf der Teile des Systems 100 implementiert sind. Des Weiteren kann das Gerät 200 eine (ggf. separate) sichere Hardware-Einheit 202 aufweisen, auf der z.B. das TEE 102 ggf. mit der zweiten Speichereinheit 106 implementiert sein kann. Ferner kann das Gerät 200 z.B. eine Kommunikationseinheit 203 umfassen, die eingerichtet ist, eine Kommunikation des Geräts 200 mit einem Backend-Server zu ermöglichen. Auf der Kommunikationseinheit 203 kann eine Software-Anwendung 105 implementiert sein, die Zugriff auf den zu schützenden Datensatz 111, 112 benötigt.

Es werden somit ein System 100 und/oder ein Gerät 200 beschrieben, bei denen die Software einer Systemmaster Elektronik (d.h. der Steuereinheit 201) in einem Bootloader 101 startet. Der Bootloader 101 startet zunächst das TEE 102. In dem TEE 102 wird ein authentisches Trustlet 103 (z.B. minimalistische Software, die atomare Aufgaben, die kritisch sind, durchführen kann) gestartet (d.h., es kann, wie oben dargelegt, ein Secure Boot Mechanismus ermöglicht werden). Dieses Trustlet bzw. diese Software 103 setzt als erstes ein Flag im "Secure RAM" des TEE 102, so dass ein weiterer Aufruf dieses Trustlets 103 unterbunden wird. Die "Secure RAM" (z.B. die zweite Speichereinheit 106) ist ein Bereich im RAM, der ausschließlich von der TEE 102 aus verwendet werden kann. Eine Manipulation des Flags ist dadurch hardwareseitig geschützt.

Als zweites dechiffriert das Trustlet 103 mit Hilfe eines Hardware Master Keys (d.h. des Datensatz-Schlüssels) den verschlüsselten Datensatz 111, der auf einem nicht flüchtigen Speicher 107 liegt. Der Klartext (d.h. der Datensatz 112) entspricht z.B. einem Verschlüsselungsschlüssel oder einem Authentisierungsschlüssel, um weitere Entschlüsselungsprozesse des Geräts 200 zu ermöglichen. Das TEE 102 kann in der Art und Weise konfiguriert sein (zur Bereitstellung eines Hardwareschutzes), dass der Zugriff auf den Hardware Master Key nicht über eine Software aus der sogenannten "Normal World" (im Falle der Steuereinheit bzw. des Systemmasters 201 ist dies z.B. das Betriebssystem 104) zugegriffen werden kann. Das heißt, ein Zugriff auf den Hardware Master Key kann ausschließlich über das Trustlet 103 erfolgen, wobei das Trustlet 103 jedoch an dem Zeitpunkt, an dem das Betriebssystem 104 läuft, bereits "gesperrt" ist.

Durch das in Fig. 1 dargestellte System 100 ist der direkte Zugriff auf den zu schützenden Datensatz 111 in verschlüsselter Form durch die Verschlüsselung geschützt. Ein Zugriff auf das Trustlet 103 ist durch das Sperren des Trustlets 103 geschützt und ein Zugriff auf den zu schützenden Datensatz 112 in nicht-verschlüsselter Form ist dadurch geschützt, dass der Zugriff nur über das TEE 102 ermöglicht wird. Weiterhin kann ein Angreifer nicht auf den Hardware Master Key in der Secure RAM zugreifen, so dass auch physische Angriffe unterbunden werden.

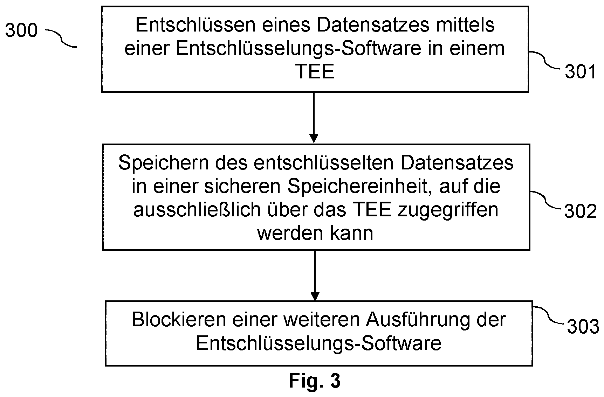

Fig. 3 zeigt ein Ablaufdiagramm eines beispielhaften Verfahrens 300 zur Steuerung des Zugriffs auf einen zu schützenden Datensatz 111, 112. Das Verfahren 300 kann durch das in diesem Dokument beschriebene System 100 ausgeführt werden. Das Verfahren 300 umfasst das Entschlüsseln 301 eines verschlüsselten, zu schützenden Datensatzes 111 mittels einer Entschlüsselungs-Software 103 in einer sicheren Laufzeitumgebung 103 (d.h. in einem TEE).

Des Weiteren umfasst das Verfahren 300 das Speichern 302 des entschlüsselten, zu schützenden Datensatzes 112 auf einer sicheren Speichereinheit 106 (z.B. auf einer secure RAM), wobei die sichere Speichereinheit 106 derart ausgebildet ist, dass ein Zugriff auf die sichere Speichereinheit 106 ausschließlich über die sichere Laufzeitumgebung 103 möglich ist (so dass unberechtigte Zugriffe zuverlässige unterbunden werden können). Des Weiteren umfasst das Verfahren 300 das Sperren 303 einer weiteren Ausführung der Entschlüsselungs-Software 103 (so dass ein unberechtigtes Entschlüsseln des verschlüsselten, zu schützenden Datensatzes 111 zuverlässig vermieden werden kann.

Ein Vorteil der in diesem Dokument beschriebenen TrustZone bzw. TEE basierten Secure Storage Lösung ist, dass lediglich eine Hardware Anforderung dahingehend vorliegt, dass eine TEE implementierbar ist (z.B. durch die Bereitstellung von Flash und RAM Speicher). Alle weiteren Komponenten sind in reiner Software realisierbar. Es kann somit eine kostengünstige Lösung bereitgestellt werden.

Weitere Vorteile aus Sicht von Cyber Security sind, dass ein direktes Abgreifen des Hardware Master Keys (zur Entschlüsselung des verschlüsselten Datensatzes 112) nicht möglich ist, dass ein Aufruf des Trustlets 102 zur Entschlüsselung des verschlüsselten Datensatzes 112 nicht möglich ist, und/oder dass ein direkter Zugriff auf den verschlüsselten Datensatz 111 nicht möglich ist.

Ferner hat die beschriebene Lösung Performance Vorteile, da der entschlüsselte Datensatz 111 immer (d.h. während des gesamten Betriebs des Systems 100) in der Secure RAM gehalten werden kann (der schneller als Flash Speicher ist), was ansonsten als unsicher gelten würde, wenn ein Geheimnis länger als für den eigentlichen Verwendungszweck im RAM liegt. In der beschriebenen Lösung hat dies keinen Einfluss auf die Sicherheit des zu schützenden Datensatzes 111.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems und/oder des vorgeschlagenen Verfahrens veranschaulichen sollen.

## Patentansprüche

1. System (100) zur Steuerung des Zugriffs auf einen zu schützenden Datensatz (111, 112), wobei
- das System (100) eine sichere Laufzeitumgebung (102) umfasst, die eingerichtet ist, eine Entschlüsselungs-Software (103) auszuführen;
- die Entschlüsselungs-Software (103) ausgebildet ist, einen verschlüsselten, zu schützenden Datensatz (111) zu entschlüsseln, und entschlüsselt auf einer sicheren Speichereinheit (106) zu speichern;
- das System (100) die sichere Speichereinheit (106) umfasst, die derart ausgebildet ist, dass ein Zugriff auf die sichere Speichereinheit (106) ausschließlich über die sichere Laufzeitumgebung (102) möglich ist; und
- die sichere Laufzeitumgebung (102) ausgebildet ist, ein nochmaliges Ausführen der Entschlüsselungs-Software (103) während des Betriebs des Systems zu unterbinden, wobei bei jeder Inbetriebnahme des Systems, der zu schützende Datensatz durch einmaliges Ausführen der Entschlüsselungs-Software entschlüsselt und in der sicheren Speichereinheit einmalig gespeichert wird, und wobei
- die sichere Laufzeitumgebung (102) ausgebildet ist, ein Flag für die Ausführbarkeit der Entschlüsselungs-Software (103) zu speichern;
- die sichere Laufzeitumgebung (102) eingerichtet ist, einen Zustand des Flags zu verändern, um ein nochmaliges Ausführen der Entschlüsselungs-Software (103) zu unterbinden; und
- die sichere Laufzeitumgebung (102) eingerichtet ist, vor Ausführen der Entschlüsselungs-Software (103) den Zustand des Flags zu überprüfen, und in Abhängigkeit von dem Zustand des Flags das Ausführen der Entschlüsselungs-Software (103) zu ermöglichen oder zu unterbinden.

2. System (100) gemäß Anspruch 1, wobei die sichere Laufzeitumgebung (102) ausgebildet ist, zum Entschlüsseln und/oder zum Verschlüsseln des zu schützenden Datensatz (111, 112) einen Hardware Schlüssel zu verwenden.

3. System (100) gemäß einem der vorhergehenden Ansprüche, wobei
- das System (100) eine weitere nicht-flüchtige Speichereinheit (107) umfasst; und
- die Entschlüsselungs-Software (103) ausgebildet ist, den verschlüsselten, zu schützenden Datensatz (112) aus der weiteren Speichereinheit (107) auszulesen.

4. System (100) gemäß einem der vorhergehenden Ansprüche, wobei
- die sichere Speichereinheit (106) einen RAM Speicher umfasst; und/oder
- die sichere Speichereinheit (106) einen flüchtigen Speicher umfasst; und/oder
- die sichere Speichereinheit (106) Teil der sicheren Laufzeitumgebung (102) ist.

5. System (100) gemäß Anspruch 1, wobei das Flag in der sicheren Speichereinheit (106) gespeichert ist.

6. System (100) gemäß einem der vorhergehenden Ansprüche, wobei das System (100) einen Bootloader (101) umfasst, der eingerichtet ist, bei Inbetriebnahme des Systems (100),
- zunächst die sichere Laufzeitumgebung (102) zu starten, um den entschlüsselten, zu schützenden Datensatz (112) in der sicheren Speichereinheit (106) zu speichern; und
- erst danach, ein Betriebssystem (104) zur Ausführung einer Software-Anwendung (105), die den zu schützenden Datensatz (111, 112) verwendet, zu starten.

7. System (100) gemäß einem der vorhergehenden Ansprüche, wobei
- das System (100) ein Betriebssystem (104) umfasst, das ausgebildet ist, eine Software-Applikation (105) auszuführen; und
- die sichere Laufzeitumgebung (102) ausgebildet ist, eine Anfrage der Software-Applikation (105) für den zu schützenden Datensatz (111, 112) zu überprüfen, und in Reaktion auf ein positives Prüfergebnis den entschlüsselten, zu schützenden Datensatz (112) aus der sicheren Speichereinheit (106) auszulesen und in Zusammenhang mit der Software-Applikation (105) zu verwenden.

8. System (100) gemäß einem der vorhergehenden Ansprüche, wobei
- die Entschlüsselungs-Software (103) zum Entschlüsseln des verschlüsselten, zu schützenden Datensatzes (111) einen Datensatz-Schlüssel verwendet; und
- das System (100) derart ausgebildet ist, dass ein Zugriff auf den Datensatz-Schlüssel ausschließlich über die Entschlüsselungs-Software (103) möglich ist.

9. System (100) gemäß einem der vorhergehenden Ansprüche, wobei der zu schützende Datensatz (111, 112) einen Verschlüsselungsschlüssel, einen Authentisierungsschlüssel und/oder ein Passwort umfasst.

10. System (100) gemäß einem der vorhergehenden Ansprüche, wobei das System (100) derart ausgebildet ist, dass der in der sicheren Speichereinheit (106) gespeicherte entschlüsselte, zu schützende Datensatz (112) bei Beendigung eines Betriebs des Systems (100) gelöscht wird, insbesondere derart, dass nach Beendigung des Betriebs des Systems (100) der zu schützende Datensatz (111, 112) nur noch verschlüsselt vorliegt.

11. System (100) gemäß einem der vorhergehenden Ansprüche, wobei die sichere Laufzeitumgebung (102) umfasst,
- ein Trusted Execution Environment;
- eine TrustZone der Firma ARM;
- einen Platform Security Processor der Firma AMD;
- einen Secure Extension Mode der Firma AMD; und/oder
- eine Trusted Execution Technology und/oder eine Software Guard Extension der Firma Intel.

12. Gerät (200), wobei
- das Gerät (200) eine Kommunikationseinheit (203) umfasst, die eingerichtet ist, über eine Kommunikationsverbindung mit einer externen Einheit Daten zu kommunizieren;
- das Gerät (200) ein System (100) gemäß einem der vorhergehenden Ansprüche umfasst, das eingerichtet ist, den Zugriff auf einen zu schützenden Datensatz (111, 112) zu steuern;
- die Kommunikationseinheit (203) eingerichtet ist, den zu schützenden Datensatz (111, 112) von dem System (100) zu beziehen und unter Verwendung des zu schützenden Datensatzes (111, 112) Daten mit der externen Einheit zu kommunizieren.

13. Verfahren (300) zur Steuerung des Zugriffs auf einen zu schützenden Datensatz (111, 112) eines Systems gemäß einem der vorhergehenden Ansprüche 1 bis 11, wobei das Verfahren (300) umfasst,
- Entschlüsseln (301) eines verschlüsselten, zu schützenden Datensatzes (111) mittels einer Entschlüsselungs-Software (103) in einer sicheren Laufzeitumgebung (102);
- Speichern (302) des entschlüsselten, zu schützenden Datensatzes (112) auf einer sicheren Speichereinheit (106); wobei die sichere Speichereinheit (106) derart ausgebildet ist, dass ein Zugriff auf die sichere Speichereinheit (106) ausschließlich über die sichere Laufzeitumgebung (102) möglich ist; und
- Unterbinden (303) eines nochmaligen Ausführens der Entschlüsselungs-Software (103) während des Betriebs des Systems, wobei bei jeder Inbetriebnahme des Systems der zu schützende Datensatz durch einmaliges Ausführen der Entschlüsselungs-Software entschlüsselt und in der sicheren Speichereinheit einmalig gespeichert wird, wobei
- ein Flag für die Ausführbarkeit der Entschlüsselungs-Software gespeichert wird;
- der Zustand des Flags verändert wird, um ein nochmaliges Ausführen der Entschlüsselungs-Software zu unterbinden
- vor Ausführen der Entschlüsselungs-Software der Zustand des Flags überprüft wird, um in Abhängigkeit von dem Zustand des Flags das Ausführen der Entschlüsselungs-Software zu ermöglichen oder zu unterbinden.

## Claims

1. System (100) for controlling access to a data record (111, 112) to be protected, wherein
- the system (100) comprises a secure runtime environment (102) which is designed to execute decryption software (103);
- the decryption software (103) is embodied to decrypt an encrypted data record (111) to be protected and to store the same in a decrypted manner on a secure storage unit (106);
- the system (100) comprises the secure storage unit (106), which is embodied so that access to the secure storage unit (106) is possible exclusively by way of the secure runtime environment (102); and
- the secure runtime environment (102) is embodied to prevent a repeated execution of the decryption software (103) during operation of the system, wherein with each commissioning of the system, the data record to be protected is decrypted by a one-time execution of the decryption software and stored once in the secure storage unit, and wherein
- the secure runtime environment (102) is embodied to store a flag for the executability of the decryption software (103);
- the secure runtime environment (102) is designed to change a state of the flag in order to prevent a repeated execution of the decryption software (103); and
- the secure runtime environment (102) is designed to check the state of the flag before execution of the decryption software (103) and to enable or prevent the execution of the decryption software (103) as a function of the state of the flag.

2. System (100) according to claim 1, wherein the secure runtime environment (102) is embodied to use a hardware key in order to decrypt and/or encrypt the data record (111, 112) to be protected.

3. System (100) according to one of the preceding claims, wherein
- the system (100) comprises a further non-volatile storage unit (107); and
- the decryption software (103) is embodied to read out the encrypted data record (112) to be protected from the further storage unit (107).

4. System (100) according to one of the preceding claims, wherein
- the secure storage unit (106) comprises a RAM memory; and/or
- the secure storage unit (106) comprises a volatile memory; and/or
- the secure storage unit (106) is part of the secure runtime environment (102).

5. System (100) according to claim 1, wherein the flag is stored in the secure storage unit (106).

6. System (100) according to one of the preceding claims, wherein the system (100) comprises a bootloader (101) which is designed, during commissioning of the system (100),
- firstly to start the secure runtime environment (102) in order to store the decrypted data record (112) to be protected in the secure storage unit (106); and
- only afterwards to start an operating system (104) for execution of a software application (105), which uses the data record (111, 112) to be protected.

7. System (100) according to one of the preceding claims, wherein
- the system (100) comprises an operating system (104) which is embodied to execute a software application (105); and
- the secure runtime environment (102) is embodied to check a query of the software application (105) for the data record (111, 112) to be protected, and in response to a positive check result to read out the decrypted data record (112) to be protected from the secure storage unit (106) and to use the same in conjunction with the software application (105).

8. System (100) according to one of the preceding claims, wherein
- the decryption software (103) for decrypting the encrypted data record (111) to be protected uses a data record key; and
- the system (100) is embodied such that access to the data record key is possible exclusively by way of the decryption software (103).

9. System (100) according to one of the preceding claims, wherein the data record (111, 112) to be protected comprises an encryption key, an authentication key and/or a password.

10. System (100) according to one of the preceding claims, wherein the system (100) is embodied so that the decrypted data record (112) to be protected which is stored in the secure storage unit (106) is deleted once operation of the system (100) has concluded, in particular so that after conclusion of the operation of the system (100) the data record (111, 112) to be protected is only present in encrypted form.

11. System (100) according to one of the preceding claims, wherein the secure runtime environment (102) comprises
- a trusted execution environment;
- a TrustZone by the company ARM;
- a Platform Security Processor by the company AMD;
- a Secure Extension Mode by the company AMD; and/or
- a Trusted Execution Technology and/or a Software Guard Extension by the company Intel.

12. Device (200), wherein
- the device (200) comprises a communication unit (203) which is designed to communicate data with an external unit by way of a communication link;
- the device (200) comprises a system (100) according to one of the preceding claims, which is designed to control access to a data record (111, 112) to be protected;
- the communication unit (203) is designed to obtain the data record (111, 112) to be protected from the system (100) and using the data record (111, 112) to be protected to communicate data with the external unit.

13. Method (300) for controlling access to a data record (111, 112) to be protected of a system according to one of the preceding claims 1 to 11, wherein the method (300) comprises
- decrypting (301) an encrypted data record (111) to be protected by means of decryption software (103) in a secure runtime environment (102);
- storing (302) the decrypted data record (112) to be protected on a secure storage unit (106); wherein the secure storage unit (106) is embodied so that access to the secure storage unit (106) is possible exclusively by way of the secure runtime environment (102); and
- preventing (303) a repeated execution of the decryption software (103) during the operation of the system, wherein with each commissioning of the system, the data record to be protected is decrypted by a one-time execution of the decryption software and stored once in the secure storage unit, wherein
- a flag is stored for the executability of the decryption software;
- the state of the flag is changed in order to prevent a repeated execution of the decryption software;
- before execution of the decryption software the state of the flag is checked to enable or prevent the execution of the decryption software as a function of the state of the flag.

## Revendications

1. Système (100) de commande de l'accès à un ensemble de données à protéger (111, 112), dans lequel
- le système (100) comprend un environnement de temps d'exploitation sûr (102), qui est mis en place pour exécuter un logiciel de décryptage (103) ;
- le logiciel de décryptage (103) est conçu pour décrypter un ensemble de données crypté à protéger (111), et l'enregistrer décrypté sur une unité de mémoire sûre (106) ;
- le système (100) comprend l'unité de mémoire sûre (106) qui est conçue d'une manière telle qu'un accès à l'unité de mémoire sûre (106) est possible exclusivement par l'environnement de temps d'exploitation sûr (102) ; et
- l'environnement de temps d'exploitation sûr (102) est conçu pour empêcher une nouvelle exécution du logiciel de décryptage (103) pendant l'exploitation du système, dans lequel à chaque mise en exploitation du système, l'ensemble de données à protéger est décrypté par une exécution unique du logiciel de décryptage et est enregistré une seule fois dans l'unité de mémoire sûre, et dans lequel
- l'environnement de temps d'exploitation sûr (102) est conçu pour enregistrer un drapeau pour la capacité d'exécution du logiciel de décryptage (103) ;
- l'environnement de temps d'exploitation sûr (102) est mis en place pour modifier un état du drapeau afin d'empêcher une nouvelle exécution du logiciel de décryptage (103) ; et
- l'environnement de temps d'exploitation sûr (102) est mis en place pour vérifier l'état du drapeau avant l'exécution du logiciel de décryptage (103) et pour permettre ou empêcher l'exécution du logiciel de décryptage (103) en fonction de l'état du drapeau.

2. Système (100) selon la revendication 1, dans lequel l'environnement du temps d'exploitation sûr (102) est conçu pour utiliser une clé matériel afin de décrypter et / ou de crypter l'ensemble de données à protéger (111, 112).

3. Système (100) selon l'une des revendications précédentes, dans lequel
- le système (100) comprend une autre unité de mémoire non volatile (107) ; et
- le logiciel de décryptage (103) est conçu pour extraire l'ensemble de données crypté à protéger (112) de l'autre unité de mémoire (107).

4. Système (100) selon l'une des revendications précédentes, dans lequel
- l'unité de mémoire sûre (106) comprend une mémoire RAM ; et / ou
- l'unité de mémoire sûre (106) comprend une mémoire volatile ; et / ou
- l'unité de mémoire sûre (106) fait partie de l'environnement de temps d'exploitation sûr (102).

5. Système (100) selon la revendication 1, dans lequel le drapeau est enregistré dans l'unité de mémoire sûre (106).

6. Système (100) selon l'une des revendications précédentes, dans lequel le système (100) comprend un chargeur d'amorçage (101) qui est mis en place lors de la mise en exploitation du système (100),
- pour démarrer d'abord l'environnement de temps d'exploitation sûr (102) afin d'enregistrer dans l'unité de mémoire sûre (106) l'ensemble de données décrypté à protéger (112) ; et
- pour démarrer seulement après, un système d'exploitation (104) pour exécuter une application logicielle (105) qui utilise l'ensemble de données à protéger (111, 112).

7. Système (100) selon l'une des revendications précédentes, dans lequel
- le système (100) comprend un système d'exploitation (104) qui est conçu pour exécuter une application logicielle (105) ; et
- l'environnement de temps d'exploitation sûr (102) est conçu pour vérifier une demande de l'application logicielle (105) pour l'ensemble de données à protéger (111, 112), et en réaction à un résultat de vérification positif, pour extraire l'ensemble de données décrypté à protéger (112) de l'unité de mémoire sûre (106) et l'utiliser en rapport avec l'application logicielle (105).

8. Système (100) selon l'une des revendications précédentes, dans lequel
- le logiciel de décryptage (103) utilise une clé d'ensemble de données pour décrypter l'ensemble de données décrypté à protéger (111) ; et
- le système (100) est conçu d'une manière telle qu'un accès à la clé de l'ensemble de données est possible exclusivement par le logiciel de décryptage (103).

9. Système (100) selon l'une des revendications précédentes, dans lequel l'ensemble de données à protéger (111, 112) comprend une clé de décryptage, une clé d'authentification et / ou un mot de passe.

10. Système (100) selon l'une des revendications précédentes, dans lequel le système (100) est conçu d'une manière telle que l'ensemble de données décrypté à protéger (112), enregistré dans l'unité de mémoire sûre (106), est effacé à la fin d'une exploitation du système (100), plus particulièrement d'une manière à ce qu'après la fin de l'exploitation du système (100), l'ensemble de données à protéger (111, 112) n'existe plus que sous forme cryptée.

11. Système (100) selon l'une des revendications précédentes, dans lequel l'environnement de temps d'exploitation sûr (102) comprend,
- un Trusted Execution Environment,
- une Trustzone de la société ARM ;
- un Platform Security Processor de la société AMD ;
- un Secure Extension Mode de la société AMD ; et / ou
- une Trusted Execution Technology et / ou une Software Guard Extension de la société Intel.

12. Appareil (200), dans lequel
- l'appareil (200) comprend une unité de communication (203) qui est mise en place pour communiquer par une liaison de communication avec une unité externe ;
- l'appareil (200) comprend un système (100) selon l'une des revendications précédentes qui est mis en place pour commander l'accès à un ensemble de données à protéger (111, 112) ;
- l'unité de communication (203) est mise en place pour obtenir l'ensemble de données à protéger (111, 112) du système (100) et, en utilisant l'ensemble de données à protéger (111, 112), communiquer des données avec l'unité externe.

13. Procédé (300) de commande de l'accès à un ensemble de données à protéger (111, 112) d'un système selon l'une des revendications précédentes 1 à 11, dans lequel le procédé (300) comprend,
- le décryptage (301) d'un ensemble de données crypté à protéger (111) à l'aide d'un logiciel de décryptage (103) dans un environnement de temps d'exploitation sûr (102) ;
- l'enregistrement (302) de l'ensemble de données décrypté à protéger (112) sur une unité de mémoire sûre (106) ; dans lequel l'unité de mémoire sûre (106) est conçue d'une manière telle qu'un accès à l'unité de mémoire sûre (106) est possible exclusivement par l'environnement de temps d'exploitation sûr (102) ; et
- l'empêchement (303) d'une nouvelle exécution du logiciel de décryptage (103) pendant l'exploitation du système, dans lequel à chaque mise en exploitation du système, l'ensemble de données à protéger est décrypté par une exécution unique du logiciel de décryptage et est enregistré une seule fois dans l'unité de mémoire sûre, dans lequel
- un drapeau pour la capacité d'exécution du logiciel de décryptage est enregistré ;
- l'état du drapeau est modifié afin d'empêcher une nouvelle exécution du logiciel de décryptage ;
- avant l'exécution du logiciel de décryptage, l'état du drapeau est vérifié pour permettre ou empêcher l'exécution du logiciel de décryptage en fonction de l'état du drapeau.
